# EUROPEAN PATENT APPLICATION

(11) **EP 4 496 424 A1**
(43) Date of publication of application: **22.01.2025**
(21) Application number: 23769726.3
(22) Date of filing: 13.03.2023
(51) Int. Cl.: H04W 76/27

(54) **METHOD AND APPARATUS FOR SENDING PHYSICAL SIDELINK CHANNEL, STORAGE MEDIUM, AND ELECTRONIC APPARATUS**

(30) Priority: 18.03.2022 CN 202210271405
(71) Applicant: ZTE Corporation, Shenzhen, Guangdong 518057 (CN)
(72) Inventor: HE, Haigang, Shenzhen, Guangdong 518057 (CN)
(74) Representative: Mozzi, Matteo
(86) International application number: PCT/CN2023/081169
(87) International publication number: WO 2023/174224

(57) **Abstract**

Provided are a method and apparatus for transmitting a physical sidelink channel, a storage medium, and an electronic apparatus. The method includes: a radio resource control (RRC) message is received from a communication device, where the RRC message includes information of a frequency-domain resource position of a target physical sidelink channel, and the information of the frequency-domain resource position of the target physical sidelink channel is configured to configure a frequency-domain position of the target physical sidelink channel; the frequency-domain position of the target physical sidelink channel is determined, where the target physical sidelink channel is configured to occupy a time-domain resource or a time-frequency resource of a communication channel; resource mapping is carried out, where a target physical channel after the resource mapping occupies several resource elements in L orthogonal frequency division multiplexing (OFDM) symbols in one slot, and a resource element mapped onto a target channel on a second one of the OFDM symbols is copied to a previous OFDM symbol immediately adjacent to the second one of the OFDM symbols, where L is greater than or equal to 2; and transmitting the target physical sidelink channel on the L OFDM symbols in the slot.

## Description

### Cross-Reference to Related Application

The application claims the benefit of priority to Chinese Patent Application No. 202210271405.3, filed with the Chinese Patent Office on March 18, 2022 and entitled "Method and apparatus for transmitting physical sidelink channel, storage medium, and electronic apparatus", which is incorporated in its entirety herein by reference.

### Technical Field

The application relates to the field of communication, and particularly relates to a method and apparatus for transmitting a physical sidelink channel, a storage medium, and an electronic apparatus.

### Background

In a sidelink communication system, when a service is required to be transmitted between user equipment (UE), the service between the UE does not pass through a network side, that is, is not forwarded by a cellular link between the UE and a base station, but is directly transmitted to target UE by data source UE by means of a sidelink. Such a mode of direct communication between the UE has features obviously different from those of a communication mode of a traditional cellular system. Typical application of sidelink communication includes device-to-device (D2D) communication and vehicle to everything (V2X) communication. The V2X communication includes vehicle to vehicle (V2V) communication, vehicle to pedestrian (V2P) communication and vehicle to infrastructure (V2I) communication. For a near field communication user who can apply the sidelink communication, the sidelink communication not only saves radio spectrum resources, but also reduces a data transmission pressure of a core network. Occupation of system resources can be reduced, spectrum efficiency of a cellular communication system can be increased, and a time delay of communication can be reduced. Moreover, network operation cost can be saved to a great extent.

Only an intelligent transport system (ITS) spectrum and a licensed spectrum allocated to a network operator are considered in a current sidelink design. A design of an unlicensed spectrum is not considered. One slot includes some sidelink channels in an existing sidelink. The sidelink channels in one slot include a physical sidelink control channel (PSCCH), a physical sidelink shared channel (PSSCH) and a physical sidelink feedback channel (PSFCH). In addition, one slot further includes an orthogonal frequency division multiplexing (OFDM) symbol that does not transmit any sidelink channel.

Only a channel in which listen before talk (LBT) succeeds can be transmitted in the unlicensed spectrum. The LBT means that a communication node is required to compete for a resource. Only the communication node succeeding in competition for a time-frequency resource can transmit information on the time-frequency resource. More specifically, in the LBT mechanism, the communication node executes a channel access process (monitors whether a channel is idle) before the information is transmitted, and can transmit the information only when monitoring that the channel is idle.

The sidelink related design described above is a design of the 3rd generation partnership project (3GPP) for the ITS spectrum and licensed spectrum. However, the 3GPP has no sidelink design for the unlicensed spectrum at present.

In addition, if the above design for the ITS spectrum and licensed spectrum is applied to the unlicensed spectrum, a probability of LBT failure is extremely high. One reason leading to a high probability of listen before talk (LBT) failure is that the existing sidelink design involves the OFDM symbol that does not transmit the sidelink channel. Since the entire OFDM symbol does not transmit the sidelink channel, a resource for which a terminal competes is occupied by other communication nodes within channel occupation time. In addition, in the existing sidelink design, the sidelink channel is discontinuously transmitted by the terminal due to the existence of a PSFCH symbol. Especially when the terminal is required to transmit the sidelink channel at a next slot after the PSFCH symbol, the sidelink channel is transmitted more discontinuously. Since the sidelink channel is discontinuously transmitted, the time-frequency resource within the channel occupation time will be occupied by other communication nodes.

In the related art, no effective solution has been provided yet to solve the problem that a channel is occupied because a sidelink channel is discontinuously transmitted.

### Summary

Embodiments of the application provide a method and apparatus for transmitting a physical sidelink channel, a storage medium, and an electronic apparatus, so as to solve at least the problem that a channel is occupied because a sidelink channel is discontinuously transmitted.

According to an aspect of an embodiment of the application, a method for transmitting a physical sidelink channel is provided. The method includes: a radio resource control (RRC) message is received from a communication device, where the RRC message includes information of a frequency-domain resource position of a target physical sidelink channel, and the information of the frequency-domain resource position of the target physical sidelink channel is configured to configure a frequency-domain position of the target physical sidelink channel; the frequency-domain position of the target physical sidelink channel is determined, where the target physical sidelink channel is configured to occupy a time-domain resource or a time-frequency resource of a communication channel; resource mapping is carried out, where a target physical channel after the resource mapping occupies several resource elements in L orthogonal frequency division multiplexing (OFDM) symbols in one slot, and a resource element mapped onto a target channel on a second one of the OFDM symbols is copied to a previous OFDM symbol immediately adjacent to the second one of the OFDM symbols, where L is greater than or equal to 2; and the target physical sidelink channel is transmitted on the L OFDM symbols in the slot.

According to another aspect of an embodiment of the application, an apparatus for transmitting a physical sidelink channel is further provided. The apparatus includes: a reception module, configured to receive a radio resource control (RRC) message from a communication device, where the RRC message includes information of a frequency-domain resource position of a target physical sidelink channel, and the information of the frequency-domain resource position of the target physical sidelink channel is configured to configure a frequency-domain position of the target physical sidelink channel; a determination module, configured to determine the frequency-domain position of the target physical sidelink channel, where the target physical sidelink channel is configured to occupy a time-domain resource or a time-frequency resource of a communication channel; a mapping module, configured to carry out resource mapping, where a target physical channel after the resource mapping occupies several resource elements in L orthogonal frequency division multiplexing (OFDM) symbols in one slot, and copy a resource element mapped onto a target channel on a second one of the OFDM symbols to a previous OFDM symbol immediately adjacent to the second one of the OFDM symbols, where L is greater than or equal to 2; and a transmission module, configured to transmit the target physical sidelink channel on the L OFDM symbols in the slot.

According to yet another aspect of an embodiment of the application, a computer-readable storage medium is provided, wherein the storage medium stores a computer program, and the computer program is configured to cause, when executed by a processor, the processor to perform the above method for transmitting a physical sidelink channel.

According to still another aspect of an embodiment of the application, an electronic apparatus is further provided, wherein the memory stores a computer program, and the processor is configured to execute the computer program to perform the above method for transmitting a physical sidelink channel by means of the computer program.

According to the application, a radio resource control (RRC) message is received from a communication device, where the RRC message includes information of a frequency-domain resource position of a target physical sidelink channel. The information of the frequency-domain resource position of the target physical sidelink channel is configured to configure a frequency-domain position of the target physical sidelink channel. The frequency-domain position of the target physical sidelink channel is determined, where the target physical sidelink channel is configured to occupy a time-domain resource or a time-frequency resource of a communication channel. Resource mapping is carried out, and a target physical channel after the resource mapping occupies several resource elements in L orthogonal frequency division multiplexing (OFDM) symbols in one slot. A resource element mapped onto a target channel on a second one of the OFDM symbols is copied to a previous OFDM symbol immediately adjacent to the second one of the OFDM symbols, and L is greater than or equal to 2. The target physical sidelink channel is transmitted on the L OFDM symbols in the slot. The problem that a channel is occupied because a sidelink channel is discontinuously transmitted is solved.

### Brief Description of the Drawings

Accompanying drawings described herein serve as a constituent part of the application to provide further understanding of the application. Embodiments of the application and their descriptions serve to explain the application, and are not to be construed as unduly limiting the application. In the figures:
Fig. 1 is a structural block diagram of hardware of a computer terminal of a method for transmitting a physical sidelink channel according to an embodiment of the application;
Fig. 2 is a flow diagram of a method for transmitting a physical sidelink channel according to an embodiment of the application;
Fig. 3 is a flow diagram of a method for transmitting a physical sidelink channel applied to a first communication device according to an embodiment of the application;
Fig. 4 is a flow diagram of a method for transmitting a physical sidelink channel applied to a second communication device according to an embodiment of the application;
Fig. 5 is schematic diagram (I) of an orthogonal frequency division multiplexing (OFDM) symbol including a target channel according to an embodiment of the application;
Fig. 6 is schematic diagram (II) of an OFDM symbol including a target channel according to an embodiment of the application;
Fig. 7 is a schematic diagram of a target slot set according to an embodiment of the application;
Fig. 8 is schematic diagram (I) of a target frequency-domain resource position according to an embodiment of the application;
Fig. 9 is schematic diagram (II) of a target frequency-domain resource position according to an embodiment of the application;
Fig. 10 is schematic diagram (I) of an OFDM symbol capable of being configured for a target channel according to an embodiment of the application;
Fig. 11 is schematic diagram (II) of an OFDM symbol capable of being configured for a target channel according to an embodiment of the application;
Fig. 12 is schematic diagram (III) of an OFDM symbol capable of being configured for a target channel according to an embodiment of the application;
Fig. 13 is schematic diagram (IV) of an OFDM symbol capable of being configured for a target channel according to an embodiment of the application;
Fig. 14 is a schematic diagram of a target slot set according to an embodiment of the application;
Fig. 15 is a schematic diagram of a slot in which K OFDM symbols including target channels capable of being transmitted exist according to an embodiment of the application;
Fig. 16 is schematic diagram (I) of a second OFDM symbol according to an embodiment of the application;
Fig. 17 is schematic diagram (II) of a second OFDM symbol according to an embodiment of the application;
Fig. 18 is schematic diagram (III) of a second OFDM symbol according to an embodiment of the application;
Fig. 19 is schematic diagram (IV) of a second OFDM symbol according to an embodiment of the application;
Fig. 20 is schematic diagram (V) of a second OFDM symbol according to an embodiment of the application;
Fig. 21 is schematic diagram (VI) of a second OFDM symbol according to an embodiment of the application; and
Fig. 22 is a structural block diagram of an apparatus for transmitting a physical sidelink channel according to an embodiment of the application.

### Detailed Description of the Embodiments

In order to enable those skilled in the art to better understand the solutions of the application, the technical solutions in embodiments of the application will be described below clearly and comprehensively in combination with accompanying drawings in the embodiments of the application. Apparently, the embodiments described are merely some embodiments rather than all embodiments. On the basis of embodiments of the application, all other embodiments obtained by those of ordinary skill in the art without making creative efforts shall all fall within the scope of protection of the application.

It should be noted that terms "first", "second", etc. in the description and claims of the application and in the above accompanying drawings are used to distinguish between similar objects and not certainly to describe a particular order or sequential order. It should be understood that data used in this way can be interchanged under appropriate circumstances such that the embodiments of the application described herein can be implemented in a sequence other than those illustrated or described herein. Moreover, terms "comprise", "include" and "have" and their variations are intended to cover non-exclusive inclusion. For instance, a process, method, system, product or device including a series of steps or units is not required to be limited by those explicitly listed, but can include other steps or units not explicitly listed or inherent to the process, method, product or device.

In order to better understand the following embodiments, some technical terms in the application will be described.
UE means user equipment;
SCI means sidelink control information;
PSCCH means a physical sidelink control channel;
PSSCH means a physical sidelink shared channel;
PSFCH means a physical sidelink feedback channel;
Sidelink means a sidelink;
OFDM means orthogonal frequency division multiplexing;
RRC means radio resource control; and
LBT means listen before talk; and
slot means a slot.

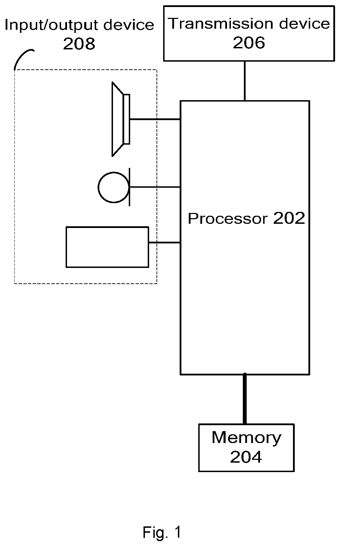

A method embodiment provided in embodiments of the application can be executed in a computer terminal or a similar computation apparatus. With running on a computer terminal as an instance, Fig. 1 is a structural block diagram of hardware of a computer terminal of a method for transmitting a physical sidelink channel according to an embodiment of the application. As shown in Fig. 1, the computer terminal may include one or more (only one is shown in Fig. 1) processors 202 (the processor 202 may include but is not limited to a microprocessor unit (MPU) or a programmable logic device (PLD)) and a memory 204 configured to store data. In an embodiment, the above computer terminal may further include a transmission device 206 configured to have a communication function and an input/output device 208. Those of ordinary skill in the art can understand that the structure shown in Fig. 1 is merely schematic and does not limit the structure of the above computer terminal. For instance, the computer terminal may include more or fewer components than those shown in Fig. 1, or have equivalent functions as those shown in Fig. 1 or different types of configuration having more functions than those shown in Fig. 1.

The memory 204 may be configured to store a computer program such as a software program and module of an application, such as a computer program corresponding to a method for transmitting a physical sidelink channel in an embodiment of the application. The processor 202 executes various functional applications and data processing by running the computer program stored in the memory 204, that is, achieves the above method. The memory 204 may include a high-speed random access memory, and may further include a non-volatile memory, such as one or more magnetic storage apparatuses, flash memories, or other non-volatile solid-state memories. In some instances, the memory 204 may further include memories remotely arranged relative to the processor 202. These remote memories may be connected to the computer terminal by means of a network. Instances of the above network include but are not limited to the internet, an enterprise intranet, a local area network, a mobile communication network and their combinations.

The transmission device 206 is configured to receive or transmit data by means of a network. Specific instances of the above network may include a wireless network provided by a communication provider of the computer terminal. In an instance, the transmission device 206 includes a network interface controller (NIC), which may be connected to other network devices by means of a base station so as to be in communication with the internet. In an instance, the transmission device 206 may be a radio frequency (RF) module, which is configured to be in communication with the internet in a wireless manner.

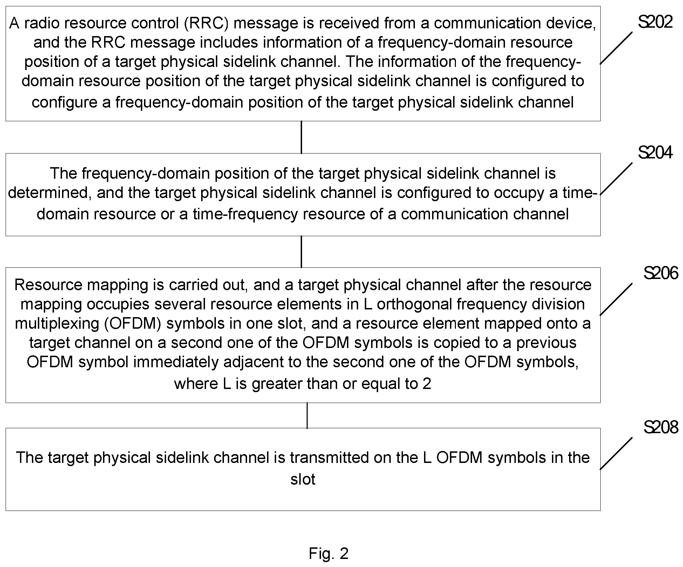

Fig. 2 is a flow diagram of a method for transmitting a physical sidelink channel according to an embodiment of the application. As shown in Fig. 2, steps of the method include:
S202: a radio resource control (RRC) message is received from a communication device, and the RRC message includes information of a frequency-domain resource position of a target physical sidelink channel. The information of the frequency-domain resource position of the target physical sidelink channel is configured to configure a frequency-domain position of the target physical sidelink channel.
S204: the frequency-domain position of the target physical sidelink channel is determined, and the target physical sidelink channel is configured to occupy a time-domain resource or a time-frequency resource of a communication channel.
S206: resource mapping is carried out, and a target physical channel after the resource mapping occupies several resource elements in L orthogonal frequency division multiplexing (OFDM) symbols in one slot, and a resource element mapped onto a target channel on a second one of the OFDM symbols is copied to a previous OFDM symbol immediately adjacent to the second one of the OFDM symbols, where L is greater than or equal to 2.
S208: the target physical sidelink channel is transmitted on the L OFDM symbols in the slot.

According to the above embodiment, a radio resource control (RRC) message is received from a communication device, and the RRC message includes information of a frequency-domain resource position of a target physical sidelink channel. The information of the frequency-domain resource position of the target physical sidelink channel is configured to configure a frequency-domain position of the target physical sidelink channel. The frequency-domain position of the target physical sidelink channel is determined, and the target physical sidelink channel is configured to occupy a time-domain resource or a time-frequency resource of a communication channel. Resource mapping is carried out, and a target physical channel after the resource mapping occupies several resource elements in L orthogonal frequency division multiplexing (OFDM) symbols in one slot. A resource element mapped onto a target channel on a second one of the OFDM symbols is copied to a previous OFDM symbol immediately adjacent to the second one of the OFDM symbols, and L is greater than or equal to 2. The target physical sidelink channel is transmitted on the L OFDM symbols in the slot. The problem that a channel is occupied because a sidelink channel is discontinuously transmitted is solved.

In an embodiment, a technical solution is further provided. The second one of the OFDM symbols is a second-to-last one of symbols configured to transmit the target physical sidelink channel in one slot.

In an embodiment, the RRC message further includes a periodicity value of a physical sidelink feedback channel (PSFCH). A periodicity value of the target physical sidelink channel is determined on the basis of the periodicity value of the PSFCH.

In an embodiment, the frequency-domain position of the target physical sidelink channel does not overlap a frequency-domain position of the PSFCH in the same slot.

In an embodiment, a frequency domain of the target physical sidelink channel is discrete. The frequency-domain position of the target physical sidelink channel corresponds to M physical resource blocks (PRB) of which frequency domains are discontinuous, and M is an integer greater than 5.

In an embodiment, a process of the resource mapping of the target physical sidelink channel includes: generate a first sequence, where the first sequence is a Zadoff-Chu (ZC) sequence; generate a second sequence, where a generation process of the second sequence includes a cyclic shift operation carried out on the first sequence; and map the second sequence to a resource element corresponding to an OFDM symbol of the target physical sidelink channel.

In an embodiment, a technical solution is further provided. A specific step includes: transmit the target physical channel on first OFDM symbols. The first OFDM symbols are the L OFDM symbols in the slot. Conditions for transmitting the target physical channel on the first OFDM symbols in the slot include at least one of the following: the slot belongs to a sidelink slot set, the RRC information includes configuration information, and the configuration information configures all OFDM symbols in the slot as symbols configured for a sidelink; the slot belongs to the sidelink slot set, and at least a physical sidelink shared channel (PSSCH) is transmitted on a slot located behind and immediately adjacent to the slot in the sidelink slot set; and the slot belongs to the sidelink slot set, a physical sidelink shared channel (PSSCH) is transmitted on at least one OFDM symbol belonging to the slot before an initial one of the first OFDM symbols, and at least a PSSCH is transmitted on the slot located behind and immediately adjacent to the slot in the sidelink slot set.

In an embodiment, a technical solution is further provided. A specific step includes: transmit the target physical sidelink channel on the L orthogonal frequency division multiplexing (OFDM) symbols in the slot, where a condition for transmitting the target physical sidelink channel includes at least one of the following: a terminal transmits no physical sidelink feedback channel (PSFCH) in the slot; and the terminal does not receive PSFCHs transmitted by other terminals in the slot; or transmit the target physical sidelink channel on the L orthogonal frequency division multiplexing (OFDM) symbols in the slot, where a condition for not transmitting the target physical sidelink channel includes at least one of the following: the terminal transmits the PSFCH in the slot; and the terminal receives the PSFCHs transmitted by the other terminals in the slot.

In an embodiment, a technical solution is further provided. A specific step includes: transmit the target physical sidelink channel in the slot. Conditions for transmitting the target physical sidelink channel in the slot includethe following: the slot belongs to a sidelink slot set, and the transmission terminal transmits at least a PSSCH on the slot, and transmits at least a PSSCH on a slot located behind and immediately adjacent to the slot in the sidelink slot set; and no other slots are included between the slot and the slot located behind and immediately adjacent to the slot in the sidelink slot set.

In an embodiment, at least one of N continuous slots in the sidelink slot set includes an OFDM symbol configured to transmit the target physical sidelink channel, and N is greater than or equal to 2. A step of executing a channel access process before the target physical channel is transmitted includes: execute a first channel access process before a first one of the N slots; and execute a second channel access process in a time period before a transmission time period in at least one of the N slots, where the transmission time period represents a time period of a first one of the OFDM symbols configured to transmit the target physical sidelink channel, the time period before the transmission time period is Y us, and Y≤25.

In an embodiment, a technical solution is further provided. Specific steps includes: select a slot X randomly in a sidelink slot set in a time period, or select a slot X randomly in a slot subset belonging to a sidelink slot set in a time period; transmit, by a terminal, at least a PSSCH on each of N continuous slots starting from the slot X in the sidelink slot set, where N is greater than or equal to 2; and transmit, by the terminal, at least the target physical sidelink channel on at least one of the N continuous slots starting from the slot X in the sidelink slot set.

In an embodiment, a technical solution is further provided. Optionally, a step of transmitting the target physical sidelink channel on continuous OFDM symbols on a slot includes: transmit the target physical sidelink channel on first OFDM symbols in the slot; transmit the target physical sidelink channel in first duration t1 of a second OFDM symbol in the slot; and transmit no PSSCH channel or not transmit any physical sidelink channel in second duration t2 of the second OFDM symbol in the slot; where the first OFDM symbols are L continuous symbols having duration of t, the second OFDM symbol is an OFDM symbol located before and immediately adjacent to an initial one of the first OFDM symbols, and t is equal to a sum of t1 and t2.

In an embodiment, a process of resource mapping on the second OFDM symbol includes one ofthe following: copy a sidelink channel or a sidelink signal having duration of t1 in a first one of the first OFDM symbols to previous time period t1 in the second OFDM symbol; copy a sidelink channel or a sidelink signal having duration of t1 in a second one of the first OFDM symbols to previous time period t1 in the second OFDM symbol; and copy a sidelink channel or a sidelink signal having duration of t1 in an OFDM symbol located before and immediately adjacent to the second OFDM symbol to previous time period t1 in the second OFDM symbol.

In an embodiment, a process of transmitting the target physical sidelink channel includes: transmit the target physical sidelink channel on first OFDM symbols in a slot; transmit a physical sidelink channel in first duration t1 of a second OFDM symbol in the slot; and transmit no PSSCH channel or not transmit any physical sidelink channel in second duration t2 of the second OFDM symbol in the slot; where the first OFDM symbols are L continuous OFDM symbols having duration of t in the slot, the second OFDM symbol is an OFDM symbol located behind and immediately adjacent to the second one of the first OFDM symbols, and t is equal to a sum of t1 and t2.

In an embodiment, the sidelink channel transmitted in t1 of the second OFDM symbol is the same as the sidelink channel transmitted in t1 of the first OFDM symbol.

In an embodiment, a process of transmitting the target physical sidelink channel and a PSSCH includes: transmit the PSSCH on each of N greater than or equal to 2 continuous slots in the sidelink slot set; transmit the target physical sidelink channel on at least one of the N greater than or equal to 2 continuous slots; and transmit no physical sidelink channel in duration not longer than 25 us in any one of the N greater than or equal to 2 continuous slots.

In an embodiment, a technical solution is further provided. Specific steps include: mark a sidelink resource pool in which the target physical sidelink channel is located as a target sidelink resource pool, where a frequency-domain resource used when the transmission terminal transmits the target physical sidelink channel is the same as frequency-domain resources used when other terminals transmit the target physical sidelink channel in the sidelink resource pool.

In an embodiment, the problem that a channel is occupied because a sidelink channel is discontinuously transmitted is solved through a method for transmitting a physical sidelink channel in an embodiment by a solution as follows.
1. An OFDM symbol of a mechanism that no whole OFDM symbol transmits a sidelink channel is eliminated. No sidelink channel is transmitted in a time period not longer than 25 us after an OFDM symbol. A previous part in the OFDM symbol still transmits the sidelink channel.
2. A new sidelink channel is additionally introduced on the basis of an existing sidelink channel and configured for channel occupation. The new sidelink channel is referred to as a physical sidelink occupation channel. By adding a new channel, the problem that no sidelink channel is transmitted by a PSFCH symbol can be avoided.

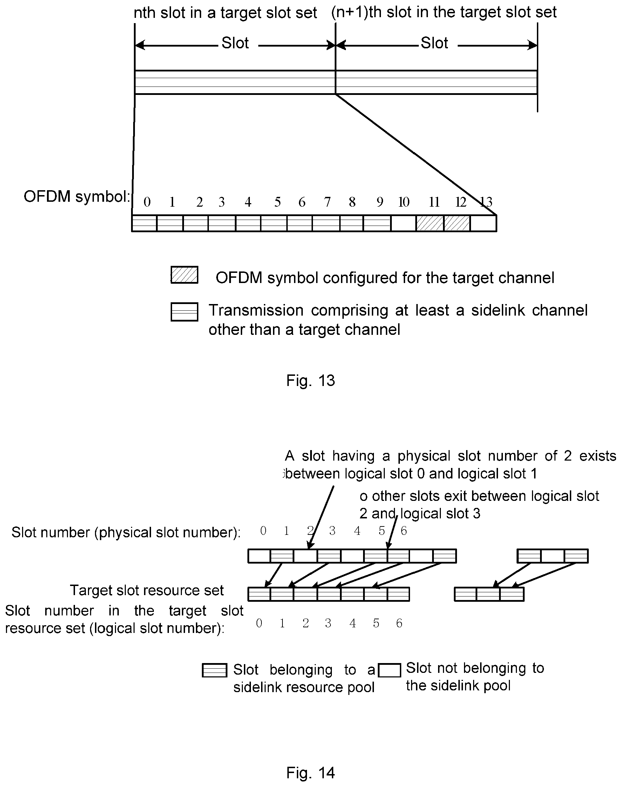

A condition for limiting transmission of a physical sidelink occupation channel may be further included on the basis of the above design. For instance, as shown in Fig. 14 (also Fig. 14 in Embodiment 4), the physical sidelink occupation channel can be transmitted in an nth slot in the target slot set only if the following conditions are satisfied: condition 1: slot n and slot n+1 adjacent to each other in the target slot set include at least a sidelink channel expected to be transmitted except for a target channel. Condition 2: slot n and slot n+1 adjacent to each other in the target slot set do not include other slots.

In Fig. 14, in cases of n=2 slots and n+1=3 slots in the target slot set, the above conditions can be satisfied.

Next, a method for transmitting a physical sidelink channel will be further described in combination with the following embodiments.

### Embodiment 1:

In the embodiment, the first communication device is a terminal (equivalent to the above transmission terminal). The second communication device is a base station (equivalent to the above communication device). That is, the second communication device is a network.

In an embodiment, the communication device includes at least one of a network, a base station, an evolved universal terrestrial radio access (E-UTRA), an evolved node B (eNB), a next generation node B (gNB) and a next generation radio access network (NG-RAN).

The first communication device receives an RRC message at a first communication device side. The RRC message includes information of a frequency-domain resource position of a target channel. The information of the frequency-domain resource position of the target channel is configured to configure a frequency-domain position of the target channel. The target channel is a physical sidelink channel. The target channel is configured for channel occupation. The target channel is transmitted on at least two OFDM symbols by the first communication device.. A resource element configured for the target channel on a second one of the at least two OFDM symbols is copied to a previous OFDM symbol immediately adjacent to the second one of the OFDM symbols.

The second one of the at least two OFDM symbols is a second-to-last one of symbols configured for a sidelink in one slot.

The above RRC message received by the first communication device is an RRC message transmitted by the second communication device.

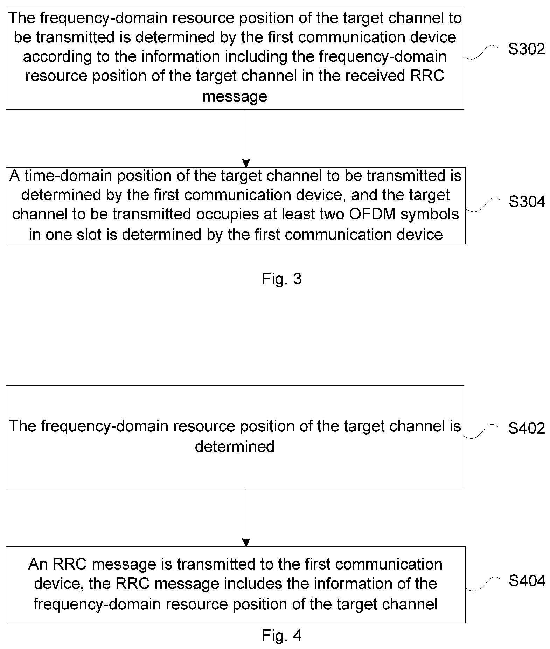

A flow of receiving the RRC message transmitted by the second communication device and transmitting the target channel by the first communication device is shown in Fig. 3. Specific steps are as follows:
S302: the frequency-domain resource position of the target channel to be transmitted is determined by the first communication device according to the information including the frequency-domain resource position of the target channel in the received RRC message.
S304: a time-domain position of the target channel to be transmitted is determined by the first communication device, and the target channel to be transmitted occupies at least two OFDM symbols in one slot is determined by the first communication device.

As shown in Fig. 4, in S402, the time-domain position of the target channel is determined by the second communication device at a second communication device side. In S402, an RRC message is transmitted to the first communication device by the second communication device, the RRC message includes the information of the frequency-domain resource position of the target channel.

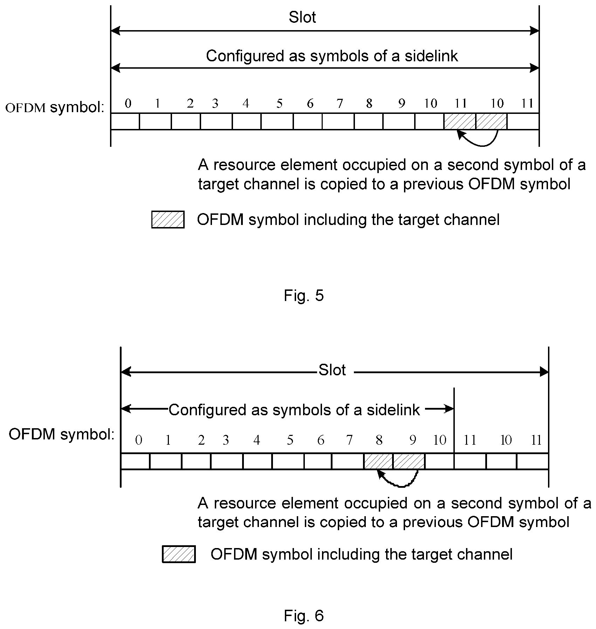

As shown in Fig. 5 or Fig. 6, a second one of the at least two OFDM symbols used by the target channel is a second-to-last one of the symbols configured for the sidelink in one slot. A resource element configured for the target channel on the second one of the at least two OFDM symbols used by the target channel is copied to a previous OFDM symbol immediately adjacent to the second OFDM symbol. The previous OFDM symbol immediately adjacent to the second OFDM symbol is a 1st one of the at least two OFDM symbols used by the target channel.

After the frequency-domain position and time-domain position of the target channel to be transmitted are determined, the target channel is transmitted at the determined frequency-domain position and time-domain position by the first communication device. The target channel transmitted by the first communication device is a physical sidelink channel. The target channel is configured for channel occupation.

An RRC message is transmitted by the second communication device at the second communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation of a first communication node.

### Embodiment 2:

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message received by the first communication device is an RRC message transmitted by the second communication device.

The frequency-domain resource position of the target channel to be transmitted is determined by the first communication device according to the information including the frequency-domain resource position of the target channel in the received RRC message.

A time-domain position of the target channel to be transmitted is determined by the first communication device. The time-domain position capable of transmitting a target channel is periodic and has a periodicity value marked as P. Moreover, the periodicity value capable of transmitting a target channel is equal to a periodicity value of a PSFCH included in the RRC message received by the first communication device. The periodicity value capable of transmitting a target channel is the periodicity value of the PSFCH in a range of the target slot set. The target slot set is a slot set of a sidelink resource pool.

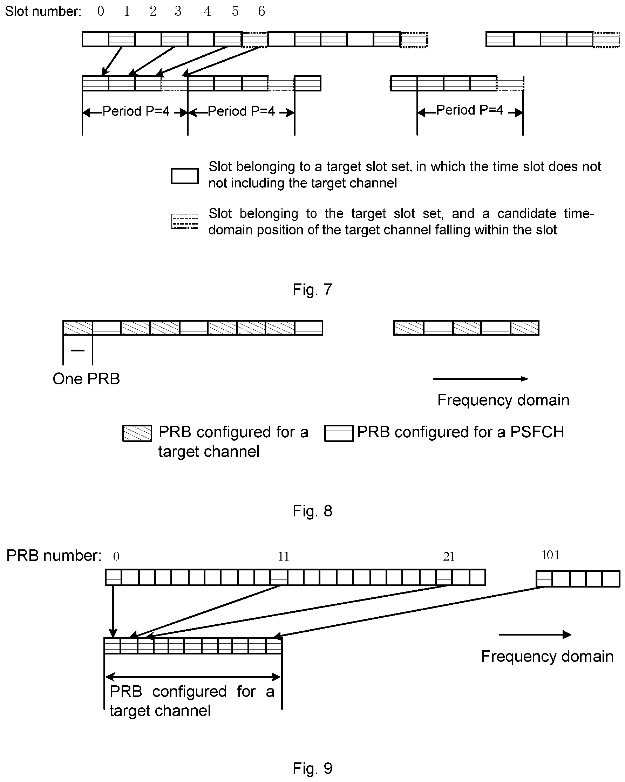

As shown in Fig. 7, the target slot set is the slot set of the sidelink resource pool. The slot belonging to the sidelink resource pool includes an OFDM symbol configured for a sidelink. The slot not belonging to the sidelink resource pool does not include an OFDM symbol configured for the sidelink.

An RRC message is transmitted by the second communication device at the second communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation of a first communication node.

The time-domain position capable of transmitting a target channel is periodic and has a periodicity value marked as P. the RRC message is transmitted by the second communication device. The RRC message includes the periodicity value of the PSFCH.

In an embodiment, in a case that the PSFCH and the target channel belong to the same resource pool, the periodicity value of the PSFCH in the same resource pool as the target channel is set as a time-domain periodicity value capable of transmitting a target channel.

### Embodiment 3:

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message received by the first communication device is an RRC message transmitted by the second communication device.

The frequency-domain resource position of the target channel configured by the RRC message includes at least one of the following:
the frequency-domain resource position of the target channel configured by the RRC message does not overlap a target frequency-domain resource position; and the target frequency-domain resource position is a frequency-domain resource position, configured by the second communication device by means of an RRC message, of a PSFCH on the same resource pool as the target channel. As shown in Fig. 8, the frequency-domain resource position of the target channel does not overlap the frequency-domain resource position of the PSFCH.

As shown in Fig. 9, the frequency-domain resource position of the target channel corresponds to M PRBs of which frequency domains are discontinuous in the frequency domain, where M is greater than or equal to 5.

And/or the resource mapping is carried out on the target channel by the first communication device, includes: a first sequence is generated, where the first sequence is a ZC (Zadoff-Chu) sequence; a second sequence is generated, where the generation of the second sequence includes a cyclic shift operation carried out on the first sequence; and the second sequence is mapped to a resource element corresponding to an OFDM symbol of the target channel.

### Embodiment 4:

In the embodiment, the first communication device is a terminal. The second communication device is a base station. That is, the second communication device is a network.

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The first communication device receives the RRC message transmitted by the second communication device.

It should be noted that the frequency-domain resource position of the target channel to be transmitted is determined by the first communication device according to the information including the frequency-domain resource position of the target channel in the received RRC message.

The time-domain position of the target channel to be transmitted is determined by the first communication device, specifically includes: L greater than or equal to 2 OFDM symbols capable of transmitting a target channel is located in a target slot, and L greater than or equal to 2 OFDM symbols capable of transmitting a target channel is marked as first OFDM symbols.

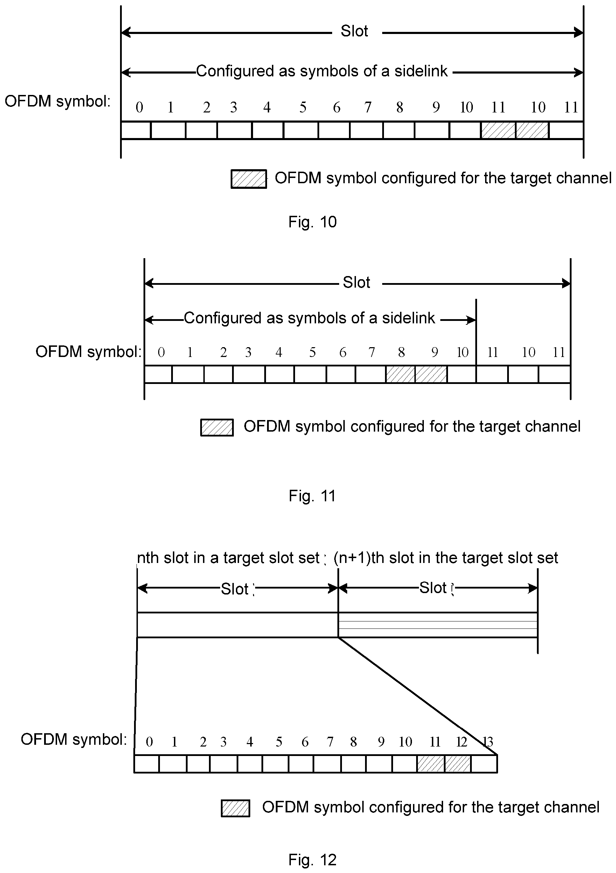

In an embodiment, conditions for transmitting the target channel on the first OFDM symbols by the first communication device may include at least one of the following: the RRC signalling received by a first communication device includes configuration information, where the configuration information configures all OFDM symbols in the slot as symbols configured for a sidelink. In Fig. 10, the RRC signaling includes the configuration information, where the configuration information configures all the OFDM symbols in the slot as the symbols configured for the sidelink. Thus, the first communication device can transmit the target channel on the first OFDM symbols capable of being configured to transmit the target channel. In Fig. 11, the configuration information included in the RRC signaling does not configure all the OFDM symbols in the slot as the symbols configured for the sidelink. Thus, the first communication device cannot transmit the target channel on the first OFDM symbols capable of being configured to transmit the target channel.

In an embodiment, the target slot belongs to a target slot set. At least a PSSCH is transmitted on a slot located behind and immediately adjacent to the target slot in the target slot set by the first communication device. The target slot set is a slot set of a sidelink resource pool. In Fig. 12, the target slot is an nth slot in the target slot set. At least a PSSCH is transmitted on an (n+1)th slot in the target slot set by the first communication device. Thus, t he target channel can be transmitted on the first OFDM symbol (OFDM symbols capable of transmitting a target channel) by the first communication device.

In an embodiment, the target slot belongs to a target slot set. A PSSCH is transmitted on at least one OFDM symbol belonging to the target slot located before a first one of the first OFDM symbols by the first communication device, and at least a PSSCH is transmitted on a slot located behind and immediately adjacent to the target slot in the target slot set by the first communication device, where the target slot set is a slot set of the sidelink resource pool. In Fig. 13, the target slot is an nth slot in the target slot set. The the PSSCH (in the target slot) is transmitted on an OFDM symbol located before the first one (2 OFDM symbols capable of transmitting the target channel) of the first OFDM symbols in target slot n by the first communication device, and the PSSCH is transmitted on the (n+1)th slot in the target slot set by the first communication device. Thus, the target channel can be transmitted on the first OFDM symbol (OFDM symbol capable of transmitting the target channel) by the first communication device.

And/or conditions for transmitting the target channel on the first OFDM symbols by the first communication device include at least one of the following: no PSFCH is transmitted in the target slot by the first communication device; and the PSFCH transmitted by other terminals do not be received in the target slot by the first communication device.

And/or conditions for transmitting the target channel in a target slot by the first communication device includes the following: at least a PSSCH is transmitted on a first slot and a second slot by the first communication device; the first slot and the second slot are adjacent slots in a target slot set, and the target slot set is a slot set of a sidelink resource pool; no other slots are included between the first slot and the second slot; the first slot is located before the second slot; and the target slot is the first slot.

In Fig. 14, in slots having slot numbers of 0, 1, 2,..., a slot set composed of slots corresponding to the sidelink resource pool is the target slot set. The slot number in a range of the target slot set is marked as a logical slot number. In a case of a slot having a slot number of 1, a slot number in the target slot set is 0, that is, the logical slot number is 0. In a case of a slot having a slot number of 3, a slot number in the target slot set is 1, that is, the logical slot number is 1. In a case of a slot having a slot number of 5, a slot number in the target slot set is 2, that is, a logical slot number is 2. In a case of a slot having a slot number of 6, a slot number in the target slot set is 3, that is, a logical slot number is 3.

In cases that the first slot is a slot having a number of 5 (logical slot number of 2) in Fig. 14, the second slot is a slot having a number of 6 (logical slot number of 3) in Fig. 14 and the target slot is a slot having a number of 5 (logical slot number of 2) in Fig. 14, and assuming that at least the PSSCH is transmitted on the first slot and the second slot by the first communication device, the following conditions are satisfied:
at least the PSSCH is transmitted on the first slot (slot 5) and the second slot (slot 6) by the first communication device; the first slot and the second slot are adjacent slots in a target slot set, and the target slot set is a slot set of a sidelink resource pool; no other slots are included between the first slot (slot 5) and the second slot (slot 6); the first slot (slot 5) is located before the second slot (slot 6); and the target slot is the first slot (slot 5).

Thus, the first communication device can transmit the target channel in a target slot.

In cases that the first slot is a slot having a number of 1 (logical slot number of 0) in Fig. 14, the second slot is a slot having a number of 3 (logical slot number of 1) in Fig. 14, and the target slot is a slot having a number of 1 (logical slot number of 0) in Fig. 14. In this case, slot 2 is included between the first slot (slot 1) and the second slot (slot 3), so the condition that no other slots are included between the first slot (slot 5) and the second slot (slot 6) is not satisfied. Thus, the target channel in the target slot cannot be transmitted by the first communication device.

### Embodiment 5:

In the embodiment, the first communication device is a terminal, the second communication device is a base station, that is, the second communication device is a network.

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message transmitted by the second communication device is received by the first communication device.

The frequency-domain resource position of the target channel to be transmitted is determined by the first communication device according to the information including the frequency-domain resource position of the target channel in the received RRC message.

The target slot set is a slot set of a sidelink resource pool. At least one of N greater than or equal to 2 continuous slots in the target slot set includes an OFDM symbol capable of transmitting a target channel. A channel access process is executed by the first communication device, includes:
the first channel access process is executed before a first one of the above N slots by the first communication device; and
a second channel access process is executed on X us located before and immediately adjacent to a first one of the OFDM symbols of a target channel capable of being transmitted in at least one of the above N slots by the first communication device, where X <= 25 us.

The above first channel access process and the second channel access process is configured to monitor whether a channel is idle.

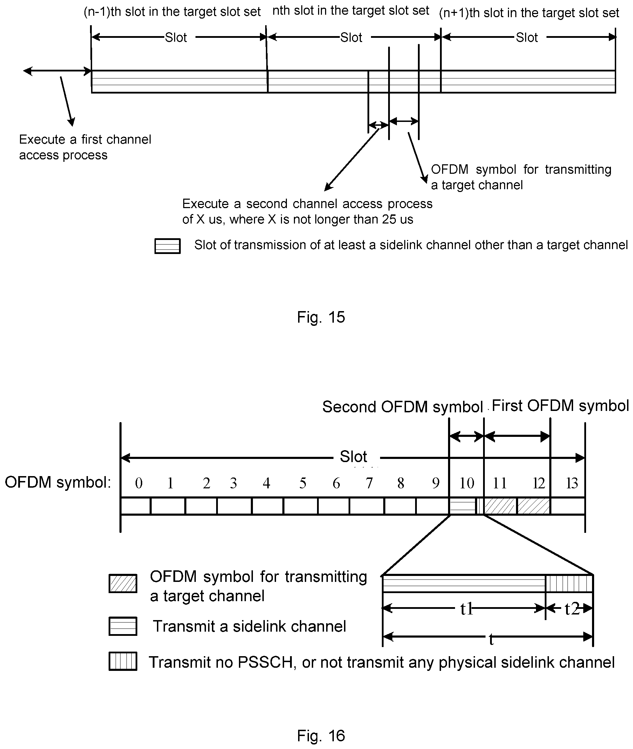

As shown in Fig. 15, for K=1 slots including OFDM symbols capable of transmitting a target channel in the above N slots, the first communication device executes a second channel access process on each slot of the K=1 slots just before and immediately adjacent to the OFDM symbols capable of transmitting the target channel. If K second channel access processes corresponding to the above K slots are all determined as channel idleness, and the first channel access process is determined as channel idleness, a first terminal transmits at least a PSSCH on each of the N slots.

### Embodiment 6:

In the embodiment, the first communication device is a terminal, the second communication device is a base station, that is, the second communication device is a network.

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message transmitted by the second communication device is received by the first communication device.

The frequency-domain resource position of the target channel to be transmitted is determined by the first communication device according to the information including the frequency-domain resource position of the target channel in the received RRC message.

A time-domain resource position capable of transmitting a target channel is determined by the first communication device.

It should be noted that the target slot set is slots in slot interval [T1, T2] and belonging to the sidelink resource pool. N greater than or equal to 2 continuous slots are selected in the target slot set by the first communication device, includes:
N continuous slots are selected in the target slot set by the first communication device, where the first one of the N continuous slots is slot X; and
slot X is a slot randomly selected by the first communication device in the target slot set, or slot X is a slot randomly selected by the first communication device in a subset of the target slot set.

In addition, at least the PSSCH is transmitted on N greater than or equal to 2 continuous slots in the target resource set by the first communication device.

The first communication device includes, on at least one of N greater than or equal to 2 continuous slots in the target resource set, an OFDM symbol of a target channel capable of being transmitted.

At least the PSSCH is transmitted on each of the N continuous slots selected from the target slot set by the first communication device. And the target channel is transmitted on an OFDM symbol including the target channel capable of being transmitted of the N continuous slots selected from the above target slot set by the first communication device.

### Embodiment 7:

In the embodiment, the first communication device is a terminal, the second communication device is a base station, that is, the second communication device is a network.

An RRC message is received at a first communication device side by the first communication device. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message transmitted by the second communication device is received by the first communication device.

The frequency-domain resource position of the target channel to be transmitted is determined by the first communication device according to the information including the frequency-domain resource position of the target channel in the received RRC message.

In an embodiment, the target channel is transmitted on L greater than or equal to 2 continuous OFDM symbols on a slot by the first communication device, includes:
the L greater than or equal to 2 continuous OFDM symbols are marked as the first OFDM symbols, where an OFDM symbol located before and immediately adjacent to a first one of the first OFDM symbols is marked as a second OFDM symbol;
a sidelink channel is transmitted on a first t1 time period in the second OFDM symbol by the first communication device;
no PSSCH channel is transmitted in a last t2 time period in the second OFDM symbol by the first communication device, or any sidelink channel does not be transmitted in the last t2 time period in the second OFDM symbol by the first communication device; and
duration of the second OFDM symbol is maked as t, where t=t1+t2.

In Fig. 16, the target channel is transmitted on L=2 continuous OFDM symbols on a slot by the first communication device, where the L=2 continuous OFDM symbols are marked as first OFDM symbols. An OFDM symbol located before and immediately adjacent to the 1st one of the first OFDM symbols is marked as the second OFDM symbol. In Fig. 14, a sidelink channel is transmitted on a first t1 time period in the second OFDM symbol by the first communication device. No PSSCH channel is transmitted by the first communication device or any sidelink channel does not be transmitted in a last t2 time period in the second OFDM symbol. The second OFDM symbol has duration t=t1+t2.

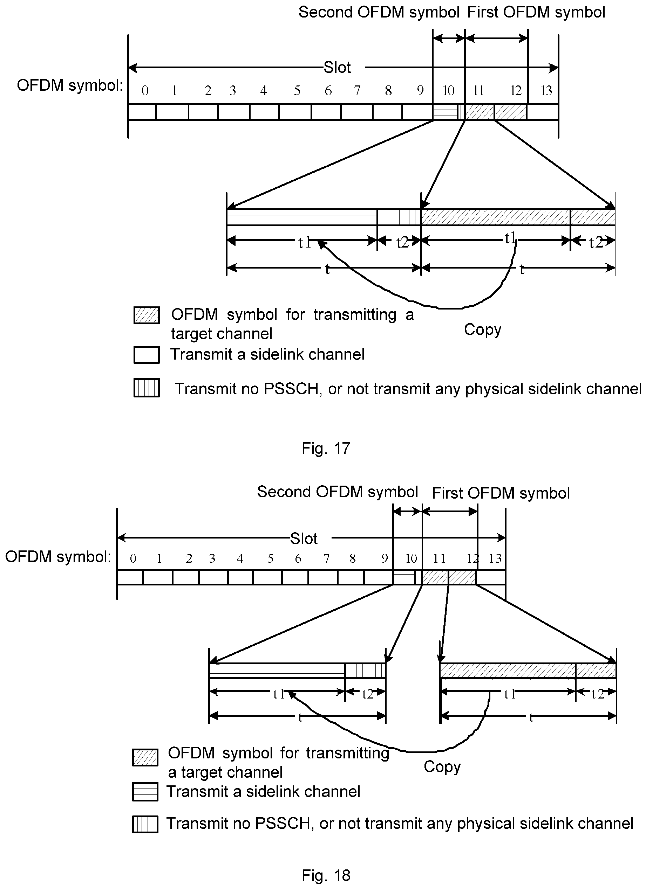

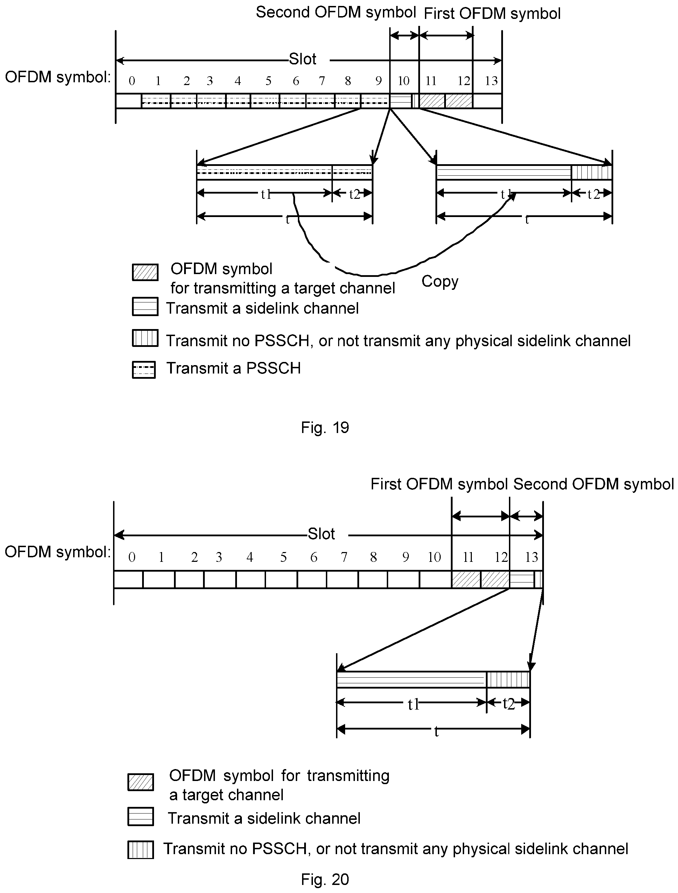

Further, the above second OFDM symbol may include one of the following:
a signal having duration t1 in a first one of the first OFDM symbols is copied to a first t1 time period in the second OFDM symbol, as shown in Fig. 17;
a signal having duration t1 in a second one of the first OFDM symbols is copied to a first t1 time period in the second OFDM symbol, as shown in Fig. 18; and
a signal having duration t1 in an OFDM symbol located before and immediately adjacent to the second OFDM symbol is copied to a first t1 time period in the second OFDM symbol, as shown in Fig. 19.

### Embodiment 8:

In the embodiment, the first communication device is a terminal, the second communication device is a base station, that is, the second communication device is a network.

An RRC message is received by the first communication device at a first communication device side. The RRC message includes information of a frequency-domain resource position of a target channel. The information of the frequency-domain resource position of the target channel is configured to configure a frequency-domain position of the target channel. The target channel is a physical sidelink channel and configured for channel occupation. The RRC message transmitted by the second communication device is received by the first communication device.

The frequency-domain resource position of the target channel to be transmitted is determined by the first communication device according to the information including the frequency-domain resource position of the target channel in the received RRC message.

And/or the target channel is transmitted by the first communication device, includes: the target channel is transmitted on L greater than or equal to 2 continuous OFDM symbols on a slot by the first communication device, where the L greater than or equal to 2 continuous OFDM symbols are marked as first OFDM symbols; a sidelink channel is transmitted on an OFDM symbol located behind and immediately adjacent to a second one of the first OFDM symbols by the first communication device, where the OFDM symbol located behind and immediately adjacent to the second one of the first OFDM symbols is marked as a second OFDM symbol. A sidelink channel is transmitted on a first t1 time period in the second OFDM symbol by the first communication device; no PSSCH channel is transmitted on a last 2 time period in the second OFDM symbol by the first communication device, or any sidelink channel does not be transmitted on the last t2 time period in the second OFDM symbol by the first communication device. Duration of the second OFDM symbol is t, where t=t1+t2.

In Fig. 20, the target channel is transmitted on L=2 continuous OFDM symbols on a slot by the first communication device, where the L=2 continuous OFDM symbols are marked as first OFDM symbols. An OFDM symbol located behind and immediately adjacent to the second one of the first OFDM symbols is marked as the second OFDM symbol. In Fig. 20, a sidelink channel is transmitted on a first t1 time period in the second OFDM symbol by the first communication device. No PSSCH channel is transmitted or any sidelink channel does not be transmitted in a last t2 time period in the second OFDM symbol by the first communication device. The second OFDM symbol has duration t=t1+t2.

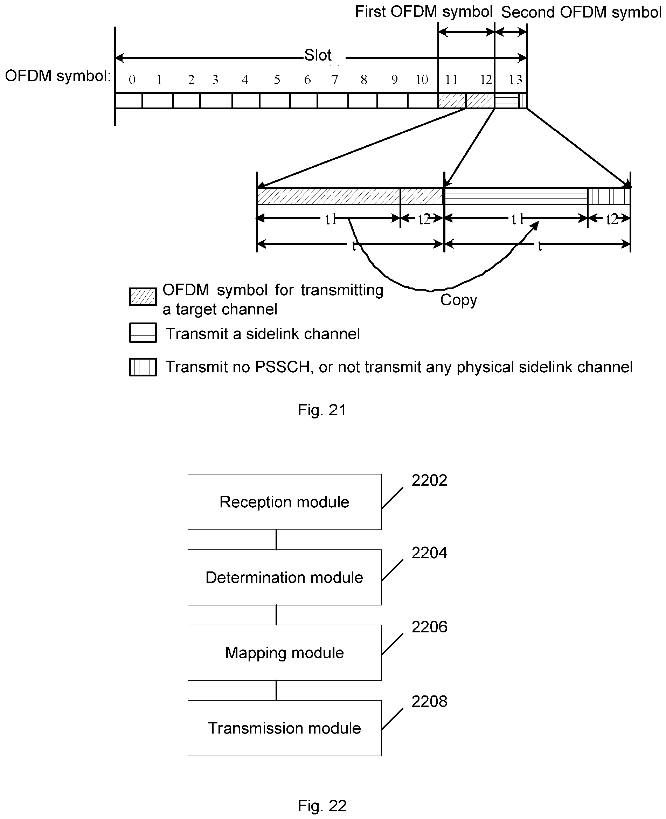

On the basis of the above, further, the target channel may be transmitted by the first communication device. As shown in Fig. 21, the sidelink signal transmitted by the first communication device in the first t1 time period in the second OFDM symbol is the same as the sidelink signal transmitted in the first t1 time period in the first OFDM symbol.

Through the descriptions in the above embodiments, those skilled in the art would clearly know that the methods according to the above embodiments may be achieved by means of software plus a necessary general-purpose hardware platform, and certainly may also be achieved by means of hardware, but in many situations the former is a better embodiment. On the basis of such understanding, the technical solutions of the application may be embodied in a form of a software product in essence or a part contributing to the existing technology. The computer software product is stored in a storage medium (such as a read-only memory (ROM)/a random access memory (RAM), a magnetic disk and an optical disk), and includes several instructions for enabling a terminal device (which may be a mobile phone, a computer, a server or a network device) to execute the method in each embodiment of the application.

The embodiment further provides an apparatus for transmitting a physical sidelink channel. The apparatus is configured to achieve the above embodiments and the preferred embodiments. The content which is described will not be repeated. The term "module", as used below, may achieve a combination of software and/or hardware having predetermined functions. Although the device described in the following embodiments is preferably implemented in software, implementation in hardware or a combination of software and hardware is also possible and conceivable.

Fig. 22 is a structural block diagram of an apparatus for transmitting a physical sidelink channel according to an embodiment of the application. As shown in Fig. 22, the apparatus for transmitting a physical sidelink channel includes:
a reception module 2202, configured to receive a radio resource control (RRC) message from a communication device, where the RRC message includes information of a frequency-domain resource position of a target physical sidelink channel, and the information of the frequency-domain resource position of the target physical sidelink channel is configured to configure a frequency-domain position of the target physical sidelink channel;
a determination module 2204, configured to determine the frequency-domain position of the target physical sidelink channel, where the target physical sidelink channel is configured to occupy a time-domain resource or a time-frequency resource of a communication channel;
a mapping module 2206, configured to carry out resource mapping, where a target physical channel after the resource mapping occupies several resource elements in L orthogonal frequency division multiplexing (OFDM) symbols in one slot, and copy a resource element mapped onto a target channel on a second one of the OFDM symbols to a previous OFDM symbol immediately adjacent to the second one of the OFDM symbols, where L is greater than or equal to 2; and
a transmission module 2208, configured to transmit the target physical sidelink channel on the L OFDM symbols in the slot.

According to the above embodiment, a radio resource control (RRC) message from a communication device is received. The RRC message includes information of a frequency-domain resource position of a target physical sidelink channel. The information of the frequency-domain resource position of the target physical sidelink channel is configured to configure a frequency-domain position of the target physical sidelink channel. The frequency-domain position of the target physical sidelink channel is determined. The target physical sidelink channel is configured to occupy a time-domain resource or a time-frequency resource of a communication channel. Resource mapping is carried out. A target physical channel after the resource mapping occupies several resource elements in L orthogonal frequency division multiplexing (OFDM) symbols in a slot. A resource element mapped onto a target channel on a second one of the OFDM symbols is copied to a previous OFDM symbol immediately adjacent to the second one of the OFDM symbols, and L is greater than or equal to 2. The target physical sidelink channel is transmitted on the L OFDM symbols in the slot. The problem that a channel is occupied because a sidelink channel is discontinuously transmitted is solved.

In an embodiment, the second one of the OFDM symbols is a second-to-last one of symbols configured to transmit the target physical sidelink channel in one slot.

In an embodiment, the RRC message further includes a periodicity value of a physical sidelink feedback channel (PSFCH). A periodicity value of the target physical sidelink channel is determined on the basis of the periodicity value of the PSFCH.

In an embodiment, the frequency-domain position of the target physical sidelink channel does not overlap a frequency-domain position of the PSFCH in the same slot.

In an embodiment, a frequency domain of the target physical sidelink channel is discrete. The frequency-domain position of the target physical sidelink channel corresponds to M physical resource blocks (PRB) of which frequency domains are discontinuous, and M is an integer greater than 5.

In an embodiment, a process of the resource mapping of the target physical sidelink channel includes: a first sequence is generated, where the first sequence is a Zadoff-Chu (ZC) sequence; a second sequence is generated, where a generation process of the second sequence includes a cyclic shift operation carried out on the first sequence; and the second sequence is mapped to a resource element corresponding to an OFDM symbol of the target physical sidelink channel.

In an embodiment, the above apparatus for transmitting a physical sidelink channel further includes a first channel transmission module, configured to transmit the target physical channel on first OFDM symbols. The first OFDM symbols are the L OFDM symbols in the slot. Conditions for transmitting the target physical channel on the first OFDM symbols in the slot include at least one of the following: the slot belongs to a sidelink slot set, the RRC information includes configuration information, and the configuration information configures all OFDM symbols in the slot as symbols configured for a sidelink; the slot belongs to the sidelink slot set, and at least a physical sidelink shared channel (PSSCH) is transmitted on a slot located behind and immediately adjacent to the slot in the sidelink slot set; and the slot belongs to the sidelink slot set, a physical sidelink shared channel (PSSCH) is transmitted on at least one OFDM symbol belonging to the slot before an initial one of the first OFDM symbols, and at least a PSSCH is transmitted on the slot located behind and immediately adjacent to the slot in the sidelink slot set.

In an embodiment, the above apparatus for transmitting a physical sidelink channel further includes a second channel transmission module, configured to transmit the target physical channel on the L orthogonal frequency division multiplexing (OFDM) symbols in the slot, where a condition for transmitting the target physical sidelink channel includes at least one of the following: a terminal transmits no physical sidelink feedback channel (PSFCH) in the slot; and the terminal does not receive PSFCHs transmitted by other terminals in the slot; or transmit the target physical sidelink channel on the L orthogonal frequency division multiplexing (OFDM) symbols in the slot, where a condition for not transmitting the target physical sidelink channel includes at least one of the following: the terminal transmits the PSFCH in the slot; and the terminal receives the PSFCHs transmitted by the other terminals in the slot.

In an embodiment, conditions for transmitting the target physical sidelink channel in the slot include the following: the slot belongs to a sidelink slot set, and the transmission terminal transmits at least a PSSCH on the slot, and at least a PSSCH is transmitted on a slot located behind and immediately adjacent to the slot in the sidelink slot set; and no other slots are included between the slot and the slot located behind and immediately adjacent to the slot in the sidelink slot set.

In an embodiment, at least one of N continuous slots in the sidelink slot set includes an OFDM symbol configured to transmit the target physical sidelink channel, and N is greater than or equal to 2. A step of executing a channel access process before the target physical channel is transmitted includes: execute a first channel access process before a first one of the N slots; and execute a second channel access process in a time period before a transmission time period in at least one of the N slots, where the transmission time period represents a time period of a first one of the OFDM symbols configured to transmit the target physical sidelink channel, the time period before the transmission time period is Y us, and Y≤25.

In an embodiment, the above apparatus for transmitting a physical sidelink channel further includes a slot selection module, configured to select a slot X randomly in a sidelink slot set in a time period, or select a slot X randomly in a slot subset belonging to a sidelink slot set in a time period; at least a PSSCH is transmitted on each of N continuous slots starting from the slot X in the sidelink slot set, by a terminal where N is greater than or equal to 2; and at least the target physical sidelink channel is transmitted on at least one of the N continuous slots starting from the slot X in the sidelink slot set by the terminal.

In an embodiment, the above apparatus for transmitting a physical sidelink channel further includes a third channel transmission module, configured to transmit the target physical sidelink channel on continuous OFDM symbols on a slot as follows: transmit the target physical sidelink channel on first OFDM symbols in the slot; transmit the target physical sidelink channel in first duration t1 of a second OFDM symbol in the slot; and transmit no PSSCH channel or not transmit any physical sidelink channel in second duration t2 of the second OFDM symbol in the slot, where the first OFDM symbols are L continuous symbols having duration of t, the second OFDM symbol is an OFDM symbol located before and immediately adjacent to an initial one of the first OFDM symbols, and t is equal to a sum of t1 and t2.

In an embodiment, a process of resource mapping on the second OFDM symbol includes one of the following: a sidelink channel or a sidelink signal having duration of t1 in a first one of the first OFDM symbols is copied to previous time period t1 in the second OFDM symbol; a sidelink channel or a sidelink signal having duration of t1 in a second one of the first OFDM symbols is copied to previous time period t1 in the second OFDM symbol; and a sidelink channel or a sidelink signal having duration of t1 in an OFDM symbol located before and immediately adjacent is copied to the second OFDM symbol to previous time period t1 in the second OFDM symbol.

In an embodiment, a process of transmitting the target physical sidelink channel includes: the target physical sidelink channel is transmitted on first OFDM symbols in a slot; a physical sidelink channel is transmitted in first duration t1 of a second OFDM symbol in the slot; and no PSSCH channel is transmitted or any physical sidelink channel does not be transmitted in second duration t2 of the second OFDM symbol in the slot; where the first OFDM symbols are L continuous OFDM symbols having duration of t in the slot, the second OFDM symbol is an OFDM symbol located behind and immediately adjacent to the second one of the first OFDM symbols, and t is equal to a sum of t1 and t2.

In an embodiment, the sidelink channel transmitted in t1 of the second OFDM symbol is the same as the sidelink channel transmitted in t1 of the first OFDM symbol.

In an embodiment, a process of transmitting the target physical sidelink channel and a PSSCH includes: the PSSCH is transmitted on each of N greater than or equal to 2 continuous slots in the sidelink slot set; the target physical sidelink channel is transmitted on at least one of the N greater than or equal to 2 continuous slots; and no physical sidelink channel is transmitted in duration not longer than 25 us in any one of the N greater than or equal to 2 continuous slots.

In an embodiment, the above apparatus for transmitting a physical sidelink channel further includes a marking module, configured to mark a sidelink resource pool in which the target physical sidelink channel is located as a target sidelink resource pool. A frequency-domain resource used when the transmission terminal transmits the target physical sidelink channel is the same as frequency-domain resources used when other terminals transmit the target physical sidelink channel in the sidelink resource pool.

In an embodiment, the above computer-readable storage medium may include but is not limited to a universal serial bus flash disk, a read-only memory (ROM), a random access memory (RAM), a removable hard disk, a magnetic disk or an optical disk, and other various media that can store computer programs.

For specific instances in the embodiments, reference can be made to instances described in the above embodiments and illustrative embodiments, which will not be repeated herein.

An embodiment of the application further provides an electronic apparatus. The electronic apparatus includes a memory and a processor. The memory stores a computer program. The processor is configured to run the computer program to execute steps in any one of the above method embodiments.

Optionally, in the embodiment, the above processor may be configured to execute the following steps by means of the computer program:
S1: a radio resource control (RRC) message is received from a communication device. The RRC message includes information of a frequency-domain resource position of a target physical sidelink channel. The information of the frequency-domain resource position of the target physical sidelink channel is configured to configure a frequency-domain position of the target physical sidelink channel.
S2: the frequency-domain position of the target physical sidelink channel is determined. The target physical sidelink channel is configured to occupy a time-domain resource or a time-frequency resource of a communication channel.
S3: resource mapping is carried out, where a target physical channel after the resource mapping occupies several resource elements in L orthogonal frequency division multiplexing (OFDM) symbols in one slot, and a resource element mapped onto a target channel on a second one of the OFDM symbols is copied to a previous OFDM symbol immediately adjacent to the second one of the OFDM symbols, where L is greater than or equal to 2.
S4: the target physical sidelink channel is transmitted on the L OFDM symbols in the slot.

In an embodiment, the above electronic apparatus may further include a transmission device and an input/output device. The transmission device is connected to the above processor. The input/output device is connected to the above processor.

For specific instances in the embodiments, reference can be made to instances described in the above embodiments and illustrative embodiments, which will not be repeated herein.

Obviously, those skilled in the art should understand that all the above modules or steps in the application can be implemented by means of a general-purpose computation apparatus, and can be centralized on a single computation apparatus or distributed on a network composed of a plurality of computation apparatuses. The modules or steps can also be implemented by means of program codes executable by the computation apparatus such that the modules or steps can be stored in a storage apparatus to be executed by the computation apparatus. In some situations, the steps shown or described may be executed in an order different from those herein. Optionally, the modules or steps are fabricated separately as individual integrated circuit modules, or a plurality of modules or steps are fabricated as a single integrated circuit module to be implemented. In this way, the application is not limited to any combination of particular hardware and software.

The above embodiments are merely preferred embodiments of the application and are not intended to limit the application. Various changes and modifications can be made on the application by those skilled in the art. Any modifications, equivalent substitutions, improvements, etc. within the principles of the application are intended to be included within the scope of protection of the application.

## Claims

1. A method for transmitting a physical sidelink channel, performed by a transmission terminal, comprising:
receiving a radio resource control ,RRC, message from a communication device, wherein the RRC message comprises information of a frequency-domain resource position of a target physical sidelink channel, and the information of the frequency-domain resource position of the target physical sidelink channel is configured to configure a frequency-domain position of the target physical sidelink channel;
determining the frequency-domain position of the target physical sidelink channel, wherein the target physical sidelink channel is configured to occupy a time-domain resource or a time-frequency resource of a communication channel;
carrying out resource mapping, wherein a target physical channel after the resource mapping occupies several resource elements in L orthogonal frequency division multiplexing ,OFDM, symbols in one slot, and copying a resource element mapped onto a target channel on a second one of the OFDM symbols to a previous OFDM symbol immediately adjacent to the second one of the OFDM symbols, wherein L is greater than or equal to 2; and
transmitting the target physical sidelink channel on the L OFDM symbols in the slot.

2. The method for transmitting a physical sidelink channel according to claim 1, further comprising:
the second one of the OFDM symbols is a second-to-last one of symbols configured to transmit the target physical sidelink channel in one slot.

3. The method for transmitting a physical sidelink channel according to claim 1, wherein the RRC message further comprises a periodicity value of a physical sidelink feedback channel ,PSFCH, and a periodicity value of the target physical sidelink channel is determined on the basis of the periodicity value of the PSFCH.

4. The method for transmitting a physical sidelink channel according to claim 1, wherein the frequency-domain position of the target physical sidelink channel does not overlap a frequency-domain position of the PSFCH in the same slot.

5. The method for transmitting a physical sidelink channel according to claim 4, wherein a frequency domain of the target physical sidelink channel is discrete, the frequency-domain position of the target physical sidelink channel corresponds to M physical resource blocks ,PRB, of which frequency domains are discontinuous, and M is an integer greater than 5.

6. The method for transmitting a physical sidelink channel according to claim 1, wherein a process of the resource mapping of the target physical sidelink channel comprises:
generating a first sequence, wherein the first sequence is a Zadoff-Chu ,ZC, sequence;
generating a second sequence, wherein a generation process of the second sequence comprises a cyclic shift operation carried out on the first sequence; and
mapping the second sequence to a resource element corresponding to an OFDM symbol of the target physical sidelink channel.

7. The method for transmitting a physical sidelink channel according to claim 1, further comprising:
transmitting the target physical channel on first OFDM symbols, wherein the first OFDM symbols are the L OFDM symbols in the slot, and conditions for transmitting the target physical channel on the first OFDM symbols in the slot comprise at least one of the following:
the slot belongs to a sidelink slot set, the RRC information comprises configuration information, and the configuration information configures all OFDM symbols in the slot as symbols configured for a sidelink;
the slot belongs to the sidelink slot set, and at least a physical sidelink shared channel ,PSSCH, is transmitted on a slot located behind and immediately adjacent to the slot in the sidelink slot set; and
the slot belongs to the sidelink slot set, a physical sidelink shared channel ,PSSCH, is transmitted on at least one OFDM symbol belonging to the slot before an initial one of the first OFDM symbols, and at least a PSSCH is transmitted on the slot located behind and immediately adjacent to the slot in the sidelink slot set.

8. The method for transmitting a physical sidelink channel according to claim 1, further comprising:
the transmitting the target physical sidelink channel on the L OFDM symbols in the slot, wherein a condition for transmitting the target physical sidelink channel comprises at least one of the following:
a terminal transmits no physical sidelink feedback channel ,PSFCH, in the slot; and
the terminal does not receive PSFCHs transmitted by other terminals in the slot; or
the transmitting the target physical sidelink channel on the L OFDM symbols in the slot, wherein a condition for not transmitting the target physical sidelink channel comprises at least one of the following:
the terminal transmits the PSFCH in the slot; and
the terminal receives the PSFCHs transmitted by the other terminals in the slot.

9. The method for transmitting a physical sidelink channel according to claim 1, further comprising:
conditions for transmitting the target physical sidelink channel in the slot comprise the following:
the slot belongs to a sidelink slot set, and the transmission terminal transmits at least a PSSCH on the slot, and transmits at least a PSSCH on a slot located behind and immediately adjacent to the slot in the sidelink slot set; and
no other slots are comprised between the slot and the slot located behind and immediately adjacent to the slot in the sidelink slot set.

10. The method for transmitting a physical sidelink channel according to claim 1, wherein at least one of N continuous slots in the sidelink slot set comprises an OFDM symbol configured to transmit the target physical sidelink channel, N is greater than or equal to 2, and executing a channel access process before the target physical channel is transmitted comprises:
executing a first channel access process before a first one of the N slots; and
executing a second channel access process in a time period before a transmission time period in at least one of the N slots, wherein the transmission time period represents a time period of a first one of the OFDM symbols configured to transmit the target physical sidelink channel, the time period before the transmission time period is Y us, and Y≤25.

11. The method for transmitting a physical sidelink channel according to claim 1, further comprising:
selecting a slot X randomly in a sidelink slot set in a time period, or selecting a slot X randomly in a slot subset belonging to a sidelink slot set in a time period;
transmitting, by a terminal, at least a PSSCH on each of N continuous slots starting from the slot X in the sidelink slot set, wherein N is greater than or equal to 2; and
transmitting, by the terminal, at least the target physical sidelink channel on at least one of the N continuous slots starting from the slot X in the sidelink slot set.

12. The method for transmitting a physical sidelink channel according to claim 1, further comprising:
transmitting the target physical sidelink channel on continuous OFDM symbols on a slot, comprises:
transmitting the target physical sidelink channel on first OFDM symbols in the slot;
transmitting the target physical sidelink channel in first duration t1 of a second OFDM symbol in the slot; and
transmitting no PSSCH channel or not transmitting any physical sidelink channel in second duration t2 of the second OFDM symbol in the slot; wherein
the first OFDM symbols are L continuous symbols having duration of t, the second OFDM symbol is an OFDM symbol located before and immediately adjacent to an initial one of the first OFDM symbols, and t is equal to a sum of t1 and t2.

13. The method for transmitting a physical sidelink channel according to claim 12, wherein a process of resource mapping on the second OFDM symbol comprises one of the following:
copying a sidelink channel or a sidelink signal having duration of t1 in a first one of the first OFDM symbols to previous time period t1 in the second OFDM symbol;
copying a sidelink channel or a sidelink signal having duration of t1 in a second one of the first OFDM symbols to previous time period t1 in the second OFDM symbol; and
copying a sidelink channel or a sidelink signal having duration of t1 in an OFDM symbol located before and immediately adjacent to the second OFDM symbol to previous time period t1 in the second OFDM symbol.

14. The method for transmitting a physical sidelink channel according to claim 1, wherein a process of transmitting the target physical sidelink channel comprises:
transmitting the target physical sidelink channel on first OFDM symbols in one slot;
transmitting a physical sidelink channel in first duration t1 of a second OFDM symbol in the slot;
transmitting no PSSCH channel or not transmitting any physical sidelink channel in second duration t2 of the second OFDM symbol in the slot; wherein
the first OFDM symbols are L continuous OFDM symbols having duration of t in the slot, the second OFDM symbol is an OFDM symbol located behind and immediately adjacent to the second one of the first OFDM symbols, and t is equal to a sum of t1 and t2.

15. The method for transmitting a physical sidelink channel according to claim 14, wherein the sidelink channel transmitted in t1 of the second OFDM symbol is the same as the sidelink channel transmitted in t1 of the first OFDM symbol.

16. The method for transmitting a physical sidelink channel according to claim 1, wherein a process of transmitting the target physical sidelink channel and a PSSCH comprises:
transmitting the PSSCH on each of N greater than or equal to 2 continuous slots in the sidelink slot set;
transmitting the target physical sidelink channel on at least one of the N greater than or equal to 2 continuous slots; and
transmitting no physical sidelink channel in duration not longer than 25 us in any one of the N greater than or equal to 2 continuous slots.

17. The method for transmitting a physical sidelink channel according to claim 1, further comprising:
marking a sidelink resource pool in which the target physical sidelink channel is located as a target sidelink resource pool, wherein a frequency-domain resource used when the transmission terminal transmits the target physical sidelink channel is the same as frequency-domain resources used when other terminals transmit the target physical sidelink channel in the sidelink resource pool.

18. An apparatus for transmitting a physical sidelink channel, comprising:
a reception module, configured to receive a radio resource control ,RRC, message from a communication device, wherein the RRC message comprises information of a frequency-domain resource position of a target physical sidelink channel, and the information of the frequency-domain resource position of the target physical sidelink channel is configured to configure a frequency-domain position of the target physical sidelink channel;
a determination module, configured to determine the frequency-domain position of the target physical sidelink channel, wherein the target physical sidelink channel is configured to occupy a time-domain resource or a time-frequency resource of a communication channel;
a mapping module, configured to carry out resource mapping, wherein a target physical channel after the resource mapping occupies several resource elements in L orthogonal frequency division multiplexing ,OFDM, symbols in one slot, and copy a resource element mapped onto a target channel on a second one of the OFDM symbols to a previous OFDM symbol immediately adjacent to the second one of the OFDM symbols, wherein L is greater than or equal to 2; and
a transmission module, configured to transmit the target physical sidelink channel on the L OFDM symbols in the slot.

19. A computer-readable storage medium, wherein the storage medium stores a computer program, and the computer program is configured to cause, when executed by a processor, the processor to perform the method as claimed in any one of claims 1-17.

20. An electronic apparatus, comprising a memory and a processor, wherein the memory stores a computer program, and the processor is configured to execute the computer program to perform the method as claimed in any one of claims 1-17.
